# EUROPÄISCHE PATENTSCHRIFT

(11) **EP 3 278 265 B1**
(45) Veröffentlichungstag und Bekanntmachung des Hinweises auf die Patenterteilung: **05.08.2020**
(21) Anmeldenummer: 16712733.1
(22) Anmeldetag: 30.03.2016
(51) Int. Cl.: G06K 7/10

(54) **LAUFZEITMESSUNG**
RUN TIME MEASUREMENT
MESURE DE TEMPS DE PROPAGATION

(30) Priorität: 01.04.2015 DE 102015004314
(43) Veröffentlichungstag der Anmeldung: 07.02.2018
(73) Patentinhaber: Giesecke+Devrient Mobile Security GmbH, 81677 München (DE)
(72) Erfinder: BALDISCHWEILER, Michael, 81825 München (DE); SEEMÜLLER, Klemens, 85386 Eching (DE)
(86) Internationale Anmeldenummer: PCT/EP2016/000534
(87) Internationale Veröffentlichungsnummer: WO 2016/155880

(56) Entgegenhaltungen:
- DE-A1-102012 022 735
- US-A1- 2012 264 373

## Beschreibung

Die vorliegende Erfindung betrifft ein Verfahren zwischen einer Transpondereinheit und einem Lesegerät, eine entsprechend eingerichtete Transpondereinheit sowie ein System umfassend das Lesegerät und die Transpondereinheit.

Als Transpondereinheit wird im Zusammenhang mit der vorliegenden Erfindung ein portabler Datenträger, insbesondere in Form einer Chipkarte, verstanden, der eingerichtet ist, kontaktlos mit einem entsprechend eingerichteten Lesegerät zu kommunizieren. Darunter fallen beispielsweise RFID-Tags verschiedener Art oder Chipkarten gemäß ISO/IEC 14443. In der Regel werden solche Transpondereinheiten über ein von dem Lesegerät erzeugtes Lesefeld mit Energie versorgt, verfügen also über keine eigene Energieversorgung.

Transpondereinheiten der genannten Art können, wenn keine geeigneten Schutzmaßnahmen vorgesehen werden, mittels eines so genannten Relaisangriffs angegriffen werden. Dabei wird mittels eines Angreifer-Lesegeräts eine Kommunikation mit der Transpondereinheit aufgebaut. Diese Kommunikation wird dann durch das Angreifer-Lesegerät, beispielsweise über ein Mobilfunknetzwerk, an einen Angreifer-Transponder weitergeleitet, welcher seinerseits in den Ansprechbereich eines herkömmlichen Lesegeräts, beispielsweise eines Bezahlterminals, eingebracht wird. Auf diese Weise kann ein Angreifer eine Bezahltransaktion mit der Transpondereinheit an dem Bezahlterminal durchführen. Denn dem Lesegerät, d.h. dem Bezahlterminal, erscheint der Angreifer-Transponder wie die "echte" Transpondereinheit und der Transpondereinheit erscheint das Angreifer-Lesegerät wie das "echte Lesegerät", d.h. das Bezahlterminal - die Kommunikation zwischen Transpondereinheit und Bezahlterminal wird lediglich über das Angreifer-Lesegerät, das Mobilfunknetz und den Angreifer-Transponder unverändert weitergeleitet.

Zum Abwehren eines solchen Angriffs sind verschiedene Ansätze bekannt. Die Transpondereinheit kann, beispielsweise wenn keine Transaktion beabsichtigt ist, abgeschirmt aufbewahrt werden. Weiter ist vorgeschlagen worden, zum Durchführen der Transaktion die Eingabe eines Bestätigungssignals durch den Nutzer der Transpondereinheit vorzuschreiben. Schließlich sind Verfahren bekannt, welche Signallaufzeiten zwischen der Transpondereinheit und dem Lesegerät in Betracht ziehen.

Aus der DE 10 2012 022 735 A1 ist ein Verfahren zum Betreiben eines Kommunikationssystems bekannt, bei dem eine Messung und Auswertung der Zeit eines von einem Lesegerät an einen Transponder übertragenen Kommandos und dem Empfang einer entsprechenden Antwort des Transponders durch das Lesegerät erfolgt. Auf diese Weise sollen Relaisangriffe verhindert werden.

Aufgabe der vorliegenden Erfindung ist es, ein alternatives Verfahren zum Erkennen und Abwehren eines Relaisangriffs vorzuschlagen.

Diese Aufgabe wird durch ein Verfahren, eine Transpondereinheit, ein Lesegerät und ein System mit den Merkmalen der nebengeordneten Ansprüche gelöst. Vorteilhafte Ausgestaltungen und Weiterbildungen sind in den abhängigen Ansprüchen angegeben.

Die vorliegende Erfindung beruht auf der Erkenntnis, dass die Bearbeitungszeit, welche eine Transpondereinheit zum Durchführen einer vorgegebenen Berechnung benötigt, wesentlich auch von der Höhe der Energie abhängt, welche der Transpondereinheit zum Durchführen dieser Berechnung zur Verfügung steht.

Wenn beispielsweise die Feldstärke eines Lesefeldes, welches ein Lesegerät bereitstellt, schwach ist, so dass die Transpondereinheit nicht genügend Energie aus dem Lesefeld einkoppeln kann, so müssen seitens der Transpondereinheit Maßnahmen zum Einsparen von Energie getroffen werden. Dies erfolgt in der Regel dadurch, dass Wartezustände eingeführt werden oder dass der interne Takt temporär angehalten oder insgesamt verringert wird. Wenn hingegen hinreichend Energie für die Transpondereinheit zur Verfügung steht, sind solche Energiesparmaßnahmen, welche sich negativ auf eine Bearbeitungszeit zum Durchführen einer vorgegebenen Berechnung auswirken, nicht notwendig.

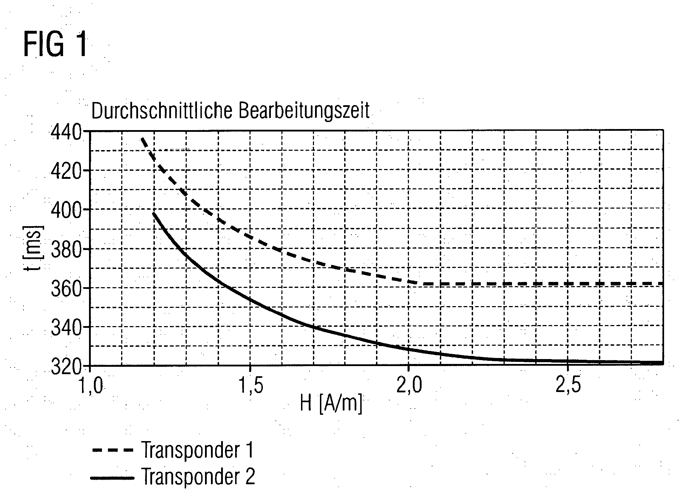

Dieser Sachverhalt ist anschaulich in Figur 1 illustriert. Dort sind für zwei beispielhafte Transponder die durchschnittlichen Bearbeitungszeiten zum Durchführen einer vorgegebenen Transaktion bei verschiedenen Lesefeld-Feldstärken aufgetragen. Dabei zeigt sich in einem ersten Bereich jeweils eine Abnahme der Bearbeitungszeit bei zunehmender Feldstärke. Dieser Bereich wird im Folgenden als "absteigender Bereich" bezeichnet. In einem zweiten Bereich, welcher im Folgenden als "Sättigungsbereich" bezeichnet wird, bleibt die Bearbeitungszeit im Wesentlichen konstant, auch wenn die Feldstärke, und damit die der Transpondereinheit zur Verfügung stehende Energie, weiter ansteigt. Der Sättigungsbereich des Transponders 1 in Fig. 1 beginnt beispielsweise bei einer Feldstärke von ca. 2,1 A/m, der Sättigungsbereich des Transponders 2 erst bei ca. 2,4 A/m.

Im Zusammenhang mit der vorliegenden Erfindung ist der Ausdruck, wonach der Wert der Energie, welcher der Transpondereinheit zum Durchführen einer vorgegebenen Berechnung zur Verfügung steht, im Sättigungsbereich der Transpondereinheit liegt, so zu verstehen, dass die Bearbeitungszeit zum Durchführen der vorgegebenen Transaktion im Wesentlichen konstant bleibt, auch wenn die dem Datenträger zur Verfügung stehende Energie erhöht werden würde. Analog ist im Folgenden der Ausdruck, wonach der Wert der Energie, welcher der Transpondereinheit zum Durchführen einer vorgegebenen Berechnung zur Verfügung steht, nicht im Sättigungsbereich der Transpondereinheit oder im absteigenden Bereich der Transpondereinheit liegt, so zu verstehen, dass sich die Bearbeitungszeit zum Durchführen der vorgegebenen Transaktion verringert, wenn die dem Datenträger zur Verfügung stehende Energie erhöht wird.

Die vorstehend erläuterte Erkenntnis macht sich die Erfindung nun auf folgende Weise zunutze.

Eine bevorzugte Ausführungsform eines Verfahrens zwischen einer Transpondereinheit und einem Lesegerät umfasst die folgenden Schritte:
Das Lesegerät veranlasst die Transpondereinheit zum Durchführen einer vorgegebenen Berechnung. Dazu kann das Lesegerät beispielsweise ein entsprechendes Kommando an die Transpondereinheit senden.

In der Transpondereinheit wird die vorgegebene Berechnung durchgeführt. Dabei steht der Transpondereinheit zum Durchführen der vorgegebenen Berechnung Energie gemäß einem ersten Wert zur Verfügung.

Anschließend wird eine erste Bearbeitungszeit bestimmt, welche die Transpondereinheit zum Durchführen der vorgegebenen Berechnung - bei dem ersten Wert verfügbarer Energie - benötigt hat.

In einem weiteren, optionalen, Schritt wird die Transpondereinheit zum erneuten Durchführen der vorgegebenen Berechnung durch das Lesegerät veranlasst. Dazu kann das Lesegerät erneut ein entsprechendes Kommando an die Transpondereinheit senden. Es ist aber auch möglich, dass sowohl das erste als auch das erneute Durchführen der vorgegebenen Transaktion mittels eines einzigen Kommandos veranlasst wird.

In der Transpondereinheit wird erneut die vorgegebene Berechnung durchgeführt, wobei der Transpondereinheit nun zum erneuten Durchführen der vorgegebenen Berechnung Energie gemäß einem zweiten Wert zur Verfügung steht. Dieser zweite Wert unterscheidet sich von dem ersten Wert.

Es wird eine zweite Bearbeitungszeit bestimmt, welche die Transpondereinheit zum erneuten Durchführen der vorgegebenen Berechnung - bei dem zweiten Wert verfügbarer Energie - benötigt hat.

Schließlich werden die erste und die zweite Bearbeitungszeit ausgewertet. Eine solche Auswertung kann insbesondere eine Differenz zwischen der ersten und der zweiten Bearbeitungszeit betreffen und/oder mit Bezug auf zumindest einen vorgegebenen Referenzwert erfolgen.

Es zeigt sich unmittelbar, dass eine Variante eines solchen Verfahrens zum Erkennen eines Relaisangriffs auf die Transpondereinheit eingesetzt werden kann.

Dabei wird der Transpondereinheit zum ersten Durchführen der vorgegebenen Berechnung Energie gemäß einem ersten Wert zur Verfügung gestellt, welcher innerhalb eines Sättigungsbereichs der Transpondereinheit liegt.

Zum erneuten Durchführen der vorgegebenen Berechnung wird der Transpondereinheit hingegen lediglich Energie gemäß einem zweiten Wert zur Verfügung gestellt, welcher außerhalb des Sättigungsbereichs der Transpondereinheit liegt und vorzugsweise lediglich gerade ausreicht, ein Durchführen der Berechnung zu ermöglichen, ohne dass die Kommunikation zwischen Lesegerät und der Transpondereinheit abbricht.

Beim Auswerten der ersten Bearbeitungszeit und der zweiten Bearbeitungszeit wird dann geprüft, ob die Differenz zwischen der zweiten Bearbeitungszeit der ersten Bearbeitungszeit einen vorgegebenen Stellenwert überschreitet. Ist dies nicht der Fall, so wird ein Relaisangriffs angenommen.

Dies ist damit zu erklären, dass die erste Bearbeitungszeit erkennbar kürzer sein sollte als die zweite Bearbeitungszeit, da beim ersten Durchführen der vorgegebenen Berechnung der Transpondereinheit hinreichend Energie zur Verfügung stand, während beim erneuten Durchführen der vorgegebenen Berechnung lediglich ein Minimum an Energie zur Verfügung stand - unter der Annahme, dass die Transpondereinheit tatsächlich im Lesefeld des Lesegerätes angeordnet war. Im Falle eines Relaisangriffs, bei dem die Kommunikation zwischen der Transpondereinheit und dem Lesegerät über ein Angreifer-Lesegerät, ein Kommunikationsnetzwerk und einen Angreifer-Transponder weitergeleitet wird, sollten - unter der Annahme, dass das Angreifer-Lesegerät ein Lesefeld einer im Wesentlichen konstanten Feldstärke bereitstellt - keine signifikanten Abweichungen der ersten und der zweiten Bearbeitungszeit erkennbar sein.

Es hat sich überraschend gezeigt, dass eine zweite Variante des eingangs beschriebenen erfindungsgemäßen Verfahrens zu einem anderen Zweck vorteilhaft eingesetzt werden kann, nämlich zur Prüfung und Qualitätskontrolle von Transpondereinheiten.

In der Regel wird ein Sättigungsbereich einer Transpondereinheit durch einen Hersteller eines integrierten Schaltkreises, der in der Transpondereinheit vorliegt, angegeben. Um nun beispielsweise diese Angabe zu überprüfen und/oder um eine Geometrie und Anordnung einer Antenne der Transpondereinheit an dem integrierten Schaltkreis zu optimieren, kann das vorstehend beschriebene Verfahren in folgender, abgewandelter Form durchgeführt werden.

Zum ersten Durchführen der vorgegebenen Berechnung wird der Transpondereinheit Energie gemäß einem ersten Wert zur Verfügung gestellt, welcher innerhalb des Sättigungsbereichs der Transpondereinheit liegt.

Zum erneuten Durchführen der vorgegebenen Berechnung wird der Transpondereinheit Energie gemäß einem zweiten Wert zur Verfügung gestellt, der vorzugsweise von dem ersten Wert abweicht, der jedoch auch innerhalb des Sättigungsbereichs der Transpondereinheit liegt.

Beim Auswerten der ersten Bearbeitungszeit und der zweiten Bearbeitungszeit wird dann geprüft, ob ein Betrag der Differenz zwischen der ersten Bearbeitungszeit und der zweiten Bearbeitungszeit einen vorgegebenen Schwellenwert unterschreitet.

Beim Durchführen dieses Verfahrens ist die Lage und Anordnung der Transpondereinheit im Lesefeld bekannt und bleibt vorzugsweise beim ersten und erneuten Durchführen der vorgegebenen Berechnung konstant.

Theoretisch müssten die erste und die zweite Bearbeitungszeit im Wesentlichen konstant sein. Qualitätsmängel der Transpondereinheit sind dadurch erkennbar, dass dies nicht der Fall ist.

Im Folgenden werden nun weitere Aspekte und Ausgestaltungen beschrieben, die jeweils in den beiden zuvor beschriebenen Anwendungsfällen anwendbar sind.

Gemäß einer bevorzugten Ausführungsform des Verfahrens bestimmt die Transpondereinheit die erste und/oder zweite Bearbeitungszeit und übermittelt diese an das Lesegerät.

Dazu verwendet die Transpondereinheit vorzugsweise ein externes Taktsignal, nämlich das Taktsignal, welches seitens des Lesegeräts mit dem Lesefeld bereitgestellt wird. Wird ein solches externes Taktsignal zum Bestimmen der Bearbeitungszeit herangezogen, so wird ein Anhalten oder Verlangsamen eines internen Taktes in der Transpondereinheit für das Lesegerät erkennbar. Vorteilhaft an dieser Ausführungsform ist, dass das Lesegerät selbst keine Zeitmesseinrichtung umfassen muss.

Gemäß einer zweiten Ausführungsform kann die Bearbeitungszeit auch durch die Transpondereinheit in Kombination mit dem Lesegerät bestimmt werden. Dies ist beispielsweise erforderlich, falls die Transpondereinheit nicht eingerichtet ist, in geeigneter Weise auf das externe Taktsignal des Lesegerätes zuzugreifen.

Eine Bestimmung der Bearbeitungszeit erfolgt dann, indem die Transpondereinheit unmittelbar vor Beginn und nach Beendigung der Durchführung der vorgegebenen Berechnung ein Signal an das Lesegerät sendet und das Lesegerät aus der zeitlichen Differenz zwischen dem Empfangen der Signale die Bearbeitungszeit bestimmt.

Grundsätzlich kann gemäß einer dritten Ausführungsform auch das Lesegerät selbst die erste und/oder zweite Bearbeitungszeit bestimmen, nämlich auf Basis einer Gesamtlaufzeit, wobei sich die Gesamtlaufzeit aus einer Summe zusammensetzt, welche eine Signallaufzeit eines Anfragekommandos an die Transpondereinheit zum Veranlassen des Durchführens der vorgegebenen Berechnung, eine Bearbeitungszeit in der Transpondereinheit zum Durchführen der vorgegebenen Berechnung und eine Signallaufzeit eines Antwortkommandos von der Transpondereinheit an das Lesegerät unmittelbar nach dem Durchführen der vorgegebenen Berechnung umfasst.

Wird angenommen, dass diese Signallaufzeiten im Wesentlichen bekannt sind, so kann aus der Gesamtlaufzeit die Bearbeitungszeit direkt berechnet werden.

Im Falle eines Relaisangriffs sind die Signallaufzeiten nicht genau bekannt, da diese sich durch die Kommunikationsumlenkung erhöhen, jedoch kann angenommen werden, dass die Signallaufzeiten im Wesentlichen konstant sind, wenn das Lesegerät die Transpondereinheit zweimal hintereinander zum Durchführen der vorgegebenen Berechnung aufgefordert und zwei entsprechende Antwortkommandos empfängt. Die daraus jeweils resultierenden Gesamtlaufzeiten können hinsichtlich ihrer Differenz ausgewertet werden, welche im Wesentlichen einer Differenz der ersten und der zweiten Bearbeitungszeit entsprechen sollte.

Wie bereits eingangs angedeutet, kann der Wert der Energie, welcher der Transpondereinheit zum Durchführen der vorgegebenen Berechnung jeweils zur Verfügung steht, von der Feldstärke eines Lesefeldes bestimmt werden, welches seitens des Lesegeräts bereitgestellt wird.

Es ist allerdings auch möglich, dass die der Transpondereinheit zum Durchführen der Berechnung zur Verfügung stehende Energie dadurch vermindert wird, dass die Transpondereinheit zusätzlich unter Last steht, beispielsweise durch eine Berechnung eines Coprozessors der Transpondereinheit. Die der Transpondereinheit zur Verfügung stehende Gesamtenergie muss dann aufgeteilt werden, zum einen zum Durchführen der vorgegebenen Berechnung, zum anderen für die Berechnung im Coprozessor.

Entsprechend wird sich, wenn nicht hinreichend viel Gesamtenergie zur Verfügung steht, die Bearbeitungszeit zum Durchführen der vorgegebenen Berechnung in dem Fall erhöhen, dass eine zusätzliche Last angelegt ist. Mit anderen Worten kann der Wert der Energie, welcher der Transpondereinheit zum Durchführen der vorgegebenen Berechnung jeweils zur Verfügung steht, auch dadurch bestimmt werden, dass seitens der Transpondereinheit verfügbare Energie nicht vollständig zum Durchführen der vorgegebenen Berechnung verwendet werden kann.

Wie ebenfalls bereits angedeutet, kann zum Auswerten der ersten und der zweiten Bearbeitungszeit die erste und die zweite Bearbeitungszeit jeweils mit einer Referenzbearbeitungszeit verglichen werden oder die Differenz zwischen der ersten Bearbeitungszeit und der zweiten Bearbeitungszeit kann mit einer Referenzdifferenz verglichen werden.

Gemäß einer bevorzugten Variante wird die vorgegebene Berechnung, deren Bearbeitungszeit zum Durchführen jeweils bestimmt wird, durch einen spezifischen Programmcode-Abschnitt in der Transpondereinheit definiert, der ein konstantes Laufzeitverhalten beim Durchführen der vorgegebenen Berechnung garantiert. In der Regel hat dieser Programmcode-Abschnitt keine andere Funktion als zum Bestimmen der Bearbeitungszeit ausgeführt zu werden, ist insbesondere unabhängig von Eingabedaten oder sonstigen internen Abläufen in der Transpondereinheit. Auf diese Weise kann sichergestellt werden, dass ein beobachtbarer Unterschied zwischen der ersten und der zweiten Bearbeitungszeit im Wesentlichen vollständig darauf zurückzuführen ist, dass die entsprechenden Energiewerte unterschiedlich sind, und dass nicht andere, programmablaufspezifische Einflüsse hinzukommen.

Deswegen erfordert die vorgegebene Berechnung vorzugsweise auch keine Zugriffe auf einen Cache-Speicher der Transpondereinheit.

Vorzugsweise werden während des Durchführens der vorgegebenen Berechnung Betriebssystemmechanismen eines Betriebssystems der Transpondereinheit, welche das Laufzeitverhalten während der Durchführung der Berechnung beeinflussen könnten, temporär deaktiviert. Solche Mechanismen, welche beispielsweise zur Abwehr von bekannten Seitenkanalangriffen auf die Transpondereinheit verwendet werden, wie beispielsweise das Verzögern oder Anhalten eines internen Taktes, das Durchführen redundanter Berechnungen, und dergleichen würde ansonsten eine Vergleichbarkeit der ersten und der zweiten Bearbeitungszeit erschweren.

Zum Sichern der Transpondereinheit gegen Seitenkanalangriffe, welche beispielsweise auf eine Übermittlung der ersten und zweiten Bearbeitungszeit an das Lesegerät gerichtet sein könnten, können verschiedene Sicherheitsmaßnahmen getroffen werden.

Beispielsweise kann vor dem Durchführen der vorgegebenen Berechnung ein Authentifizieren des Lesegerätes durch die Transpondereinheit vorgesehen sein. Damit wird sichergestellt, dass lediglich authentifiziere Lesegeräte in Kontakt mit der Transpondereinheit kommen. Kann ein Lesegerät nicht authentifiziert werden, wird die Kommunikation abgebrochen und das erfindungsgemäße Verfahren erst gar nicht begonnen.

Alternativ oder zusätzlich kann die Transpondereinheit einen Nutzungszähler umfassen, welcher beim Durchführen der vorgegebenen Berechnung inkrementiert wird. Der Zähler wird dabei vorzugsweise nur nach einer erfolgreichen Transaktion mit dem Lesegerät wieder dekrementiert. Die Transpondereinheit kann deaktiviert werden, wenn der Zähler einen vorgegebenen, vorzugsweise kleinen einstelligen Schwellenwert, beispielsweise zwischen 3 und 6, übersteigt. Damit wird zumindest sichergestellt, dass ein Angreifer-Lesegerät nur sehr begrenzt die Möglichkeit hat, die Bearbeitungszeiten der Transpondereinheit abzufragen.

Eine bevorzugte Ausführungsform einer erfindungsgemäßen Transpondereinheit umfasst eine Antenne und einen mit der Antenne verbundenen integrierten Schaltkreis und ist eingerichtet, mit einem Lesegerät kontaktlos zu kommunizieren. Die Transpondereinheit ist weiter eingerichtet, eine absolute Bearbeitungszeit zum Durchführen einer vorgegebenen Berechnung direkt oder indirekt zu bestimmen.

Gemäß einer bevorzugten Variante ist die Transpondereinheit eingerichtet, die Bearbeitungszeit direkt unter Verwendung eines externen, seitens eines Lesegeräts bereitgestellten Taktsignals zu bestimmen.

Gemäß einer alternativen Variante kann die Transpondereinheit auch eingerichtet sein, die Bearbeitungszeit indirekt zu bestimmen. Dazu ist die Transpondereinheit eingerichtet, unmittelbar vor Beginn und nach Beendigung einer Durchführung der vorgegebenen Berechnung ein Signal an das Lesegerät zu senden. Das Lesegerät kann dann aus der zeitlichen Differenz zwischen dem Empfangen der Signale die Bearbeitungszeit bestimmen.

Eine bevorzugte Ausführungsform eines erfindungsgemäßen Lesegeräts ist eingerichtet, kontaktlos mit einer Transpondereinheit zu kommunizieren. Das Lesegerät ist weiter eingerichtet, die Transpondereinheit zum wiederholten Durchführen einer vorgegebenen Berechnung zu veranlassen, wobei der Transpondereinheit zum Durchführen der vorgegebenen Berechnung jeweils ein seitens des Lesegeräts vorgegebener Wert an Energie zur Verfügung steht. Das Lesegerät kann dazu beispielsweise die Feldstärke des Lesefeldes ändern oder eine zusätzliche Last an die Transpondereinheit anlegen, beispielsweise mittels eines Kommandos zum Ausführen einer zusätzlichen Berechnung in einem Coprozessor der Transpondereinheit. Das Lesegerät ist schließlich eingerichtet, seitens der Transpondereinheit empfangene Bearbeitungszeiten zum Durchführen der vorgegebenen Berechnung auszuwerten.

Ein erfindungsgemäßes System schließlich umfasst ein erfindungsgemäßes Lesegerät sowie eine vorstehend beschriebene Transpondereinheit, welche jeweils eingerichtet sind, ein Verfahren der beschriebenen Art durchzuführen.

Die vorliegende Erfindung wird im Folgenden mit Bezug auf die beiliegenden Zeichnungen beispielhaft beschrieben. Darin zeigen:
- Figur 1: die Abhängigkeit der Bearbeitungszeit zum Durchführen einer vorgegebenen Berechnung durch eine Transpondereinheit von der der Transpondereinheit dazu zur Verfügung stehenden Energie;
- Figur 2: Schritte einer ersten bevorzugten Ausführungsform eines erfindungsgemäßen Verfahrens;
- Figur 3: Schritte einer zweiten bevorzugten Ausführungsform eines erfindungsgemäßen Verfahrens;
- Figur 4: Schritte einer dritten bevorzugten Ausführungsform eines erfindungsgemäßen Verfahrens und
- Figur 5: Schritte beim Bestimmen einer Bearbeitungszeit zum Durchführen einer vorgegebenen Berechnung durch die Transpondereinheit.

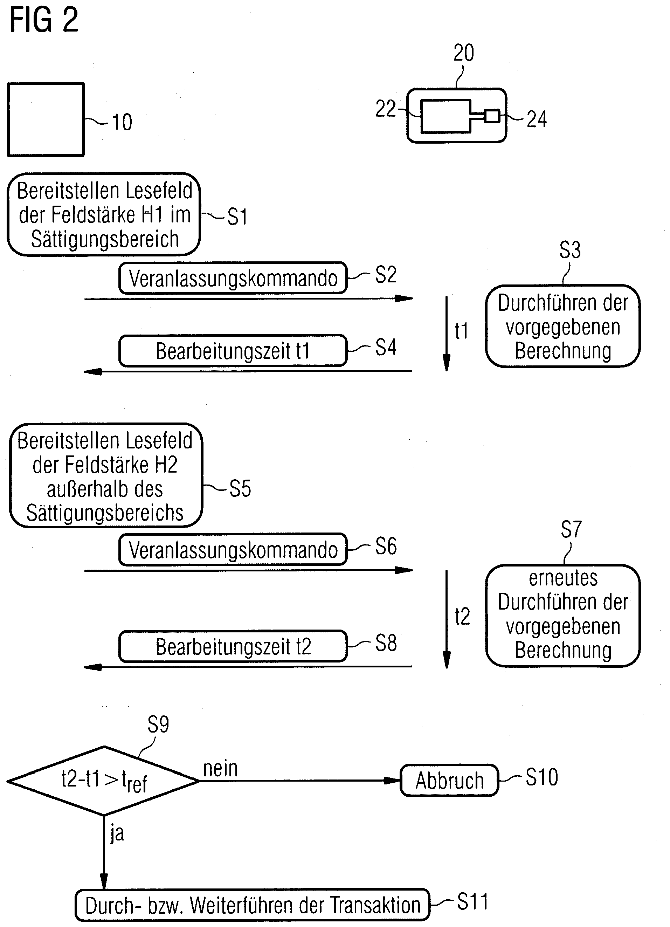

Das mit Bezug auf Figur 2 beschriebene Verfahren zwischen einem Lesegerät 10 und einer Transpondereinheit 20, welche einen integrierten Schaltkreis 24 und eine mit den Schaltkreis verbundene Antennenspule 22 umfasst, eignet sich zum Erkennen und Verhindern eines Relaisangriffs auf die Transpondereinheit 20.

In einem erstem Schritt stellt das Lesegerät 10 ein Lesefeld mit einer Feldstärke H1 zur Verfügung, welche im Sättigungsbereich der der Transpondereinheit 20 liegt, d.h. dass der Wert an Energie, den die Transpondereinheit 20 bei geeigneter Anordnung im Lesefeld aus dem Lesefeld auskoppeln kann, hinreichend groß ist, um eine vorgegebene Berechnung mit maximaler Geschwindigkeit, d.h. in minimaler Bearbeitungszeit, durchzuführen.

In Schritt S2 sendet das Lesegerät 10 ein Veranlassungskommando an die Transpondereinheit 20, welches die Transpondereinheit 20 veranlasst, eine vorgegebene Berechnung durchzuführen.

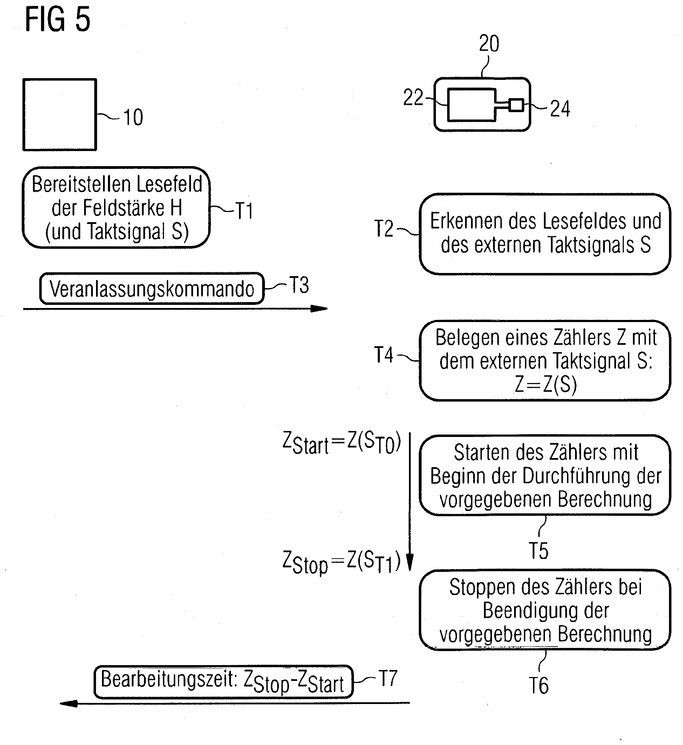

In Schritt S3 wird diese vorgegebene Berechnung seitens der Transpondereinheit 20 durchgeführt. Dabei wird seitens der Transpondereinheit 20 eine erste Bearbeitungszeit t1, die zum Durchführen der Berechnung notwendig war, bestimmt, wie dies nachfolgend noch im Detail mit Bezug auf Figur 5 beschrieben wird.

Diese Bearbeitungszeit t1 wird in Schritt S4 an das Lesegerät 10 übermittelt.

In Schritt S5 stellt das Lesegerät 10 nun ein Lesefeld der Feldstärke H2 bereit. Diese Feldstärke H2 liegt außerhalb des Sättigungsbereichs der Transpondereinheit 20, d.h. das Lesefeld ist zwar stark genug, um ein Betreiben der Transpondereinheit 20 zu ermöglichen, ein Lesegerät einer größeren Feldstärke würde allerdings ein schnelleres Betreiben der Transpondereinheit zulassen.

In Schritt S6 wird erneut das Veranlassungskommando an die Transpondereinheit 20 übermittelt, welche in Schritt S7 erneut die vorgegebene Berechnung durchführt und in Schritt S8 eine Bearbeitungszeit t2, welche zum erneuten Durchführen der vorgegebenen Berechnung notwendig war, an das Lesegerät 10 übermittelt.

In Schritt S9 prüft das Lesegerät 10, ob die Differenz zwischen der Bearbeitungszeit t2 und der Bearbeitungszeit t1 größer ist als ein vorgegebener Schwellenwert t_{ref}.

Ist dies der Fall, so wird eine Transaktion zwischen Lesegerät 10 und Transpondereinheit 20, wie mit Bezug auf Schritt S11 angedeutet, durch- oder weitergeführt.

In dem Fall aber, dass die Bearbeitungszeiten t1 und t2 sich nicht hinreichend unterscheiden, muss von einem Relaisangriff auf die Transpondereinheit 20 ausgegangen werden. Dieser Schluss wird unter der Annahme gezogen, dass ein Angreifer-Lesegerät, welches im Falle eines Relaisangriffs zwischen das Lesegerät 10 und die Transpondereinheit 20 geschaltet wäre, sowohl beim Durchführen der Schritte S2 bis S4 als auch beim Durchführen der Schritte S6 bis S8 im Wesentlichen ein Lesefeld konstanter Feldstärke bereitstellen würde. Dann allerdings wären im Wesentlichen identische Bearbeitungszeiten t1 und t2 erkennbar. Daher wird das Verfahren abgebrochen, wenn solches erkannt wird, wie mit Bezug auf Schritt S10 angedeutet, ohne dass eine Transaktion zwischen dem Lesegerät 10 und der Transpondereinheit 20 erfolgt.

Gemäß einer nicht gezeigten, optionalen Variante kann das vorstehend beschriebene Verfahren dadurch noch verbessert werden, dass den Schritten S1 bis S4 bzw. S6 bis S8 entsprechende Schritte bei einer mittleren Feldstärke H1.5 durchgeführt werden, welche in etwa zwischen der Feldstärke H1 und der Feldstärke H2 angesiedelt ist. Eine daraus resultierende Bearbeitungszeit t1.5 sollte dann zwischen den gemäß Figur 2 bestimmten Bearbeitungszeiten t1 und t2 angeordnet sein. Die Feldstärken H1.5 und H2 sind dabei jeweils im absteigenden Bereich der Transpondereinheit angeordnet (vgl. Figur 1, derjenige Bereich auf der x-Achse, bei welchem eine Kurve, welche die feldstärkenabhängigen Bearbeitungszeiten anzeigt, einen absteigenden Verlauf zeigt). Vorzugsweise liegt die Feldstärke H2 im Bereich eines starken Abstiegs, die Feldstärke H1.5 in dem Bereich, in dem die Kurve bereits einen relativ flachen, aber immer noch absteigenden Verlauf zeigt.

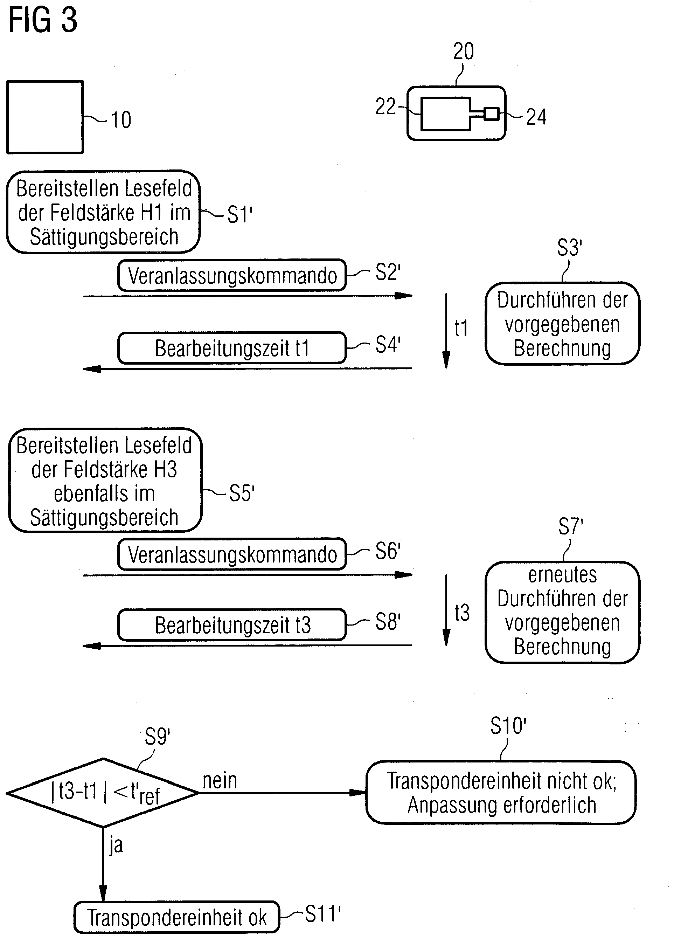

Das mit Bezug auf Figur 3 dargestellte Verfahren unterscheidet sich auf den ersten Blick nur sehr geringfügig von dem Verfahren aus Figur 2.

Im Gegensatz zum Verfahren aus Fig. 2, bei welchem eine genaue Lage und Anordnung der Transpondereinheit 20 im Lesefeld des Lesegeräts 10 nicht als bekannt angenommen wird, kann beim Verfahren nach Fig. 2 von einer bekannten und konstanten Anordnung und Lage der Transpondereinheit 20 im Lesefeld des Lesegeräts 10 ausgegangen werden.

Die Schritte S1' bis S4' entsprechen den Schritten S1 bis S4 aus Figur 2. Die Schritte S5' bis S8' entsprechen im Wesentlichen ebenfalls den Schritten S5 bis S8 aus Figur 2, mit dem Unterschied, dass gemäß Schritt S5' nun ein Lesefeld der Feldstärke H3 erzeugt wird, welches ebenfalls im Sättigungsbereich der Transpondereinheit 20 liegt. Vorzugsweise unterscheidet sich die Feldstärke H3 von der Feldstärke H1.

In Schritt S9' wird nun, in Abweichung zu Schritt S9 aus Figur 2, geprüft, ob ein Betrag der Differenz der Bearbeitungszeiten t1 und t3 kleiner als ein vorgegebener Schwellenwert t'_{ref} ist. Ist dieser Schwellenwert hinreichend klein vorgegeben, wird damit im Wesentlichen geprüft, ob die beiden Bearbeitungszeiten t1 und t3 übereinstimmen.

Optional, und in Fig. 3 nicht dargestellt, kann, wie aus dem Stand der Technik bekannt, im Anschluss an die Schritte S4' und S8' jeweils geprüft werden, ob die Bearbeitungszeiten t1 und t4 jeweils innerhalb vorgegebener Intervalle liegen. Ist dies nicht der Fall, so kann die Transpondereinheit 20 als anpassungsbedürftig gelten.

Wie mit Bezug auf die Schritte S10' und S11' erkennbar, eignet sich ein solches Verfahren zur Prüfung der Qualität einer Transpondereinheit 20. Ist die Antenne 22 in optimaler Weise geformt und mit dem integrierten Schaltkreis 24 gekoppelt und führt der integrierter Schaltkreis 24 die vorgegebene Berechnung innerhalb des Sättigungsbereich stets mit einer im Wesentlichen identischen Bearbeitungszeit aus, wie dies der Fall sein sollte, so sollten die Bearbeitungszeiten t1 und t3 im Wesentlichen übereinstimmen. Ist dies der Fall, wird die Transpondereinheit 20 als in Ordnung beurteilt (vgl. Schritt S11'). Ist dies nicht der Fall, wird in Schritt S10' erkannt, dass eine Anpassung der Transpondereinheit 20 erforderlich ist.

Optional, und ebenfalls in Fig. 3 nicht gezeigt, können die Schritte S1' bis S4' bzw. S5' bis S8' mit einer weiteren Feldstärke H4 im Sättigungsbereich der Transpondereinheit wiederholt werden. Die resultierende Bearbeitungszeit sei t4. Wenn beispielsweise gilt, dass H4 > H3 > H1, so sollte sich ergeben, dass |t4-t3| < t"_{ref} mit t"_{ref} < t'_{ref}. Mit anderen Worten sollte eine beobachtbare Differenz von Bearbeitungszeiten umso kleiner werden, je deutlicher die Feldstärken im Sättigungsbereich der Transpondereinheit liegen.

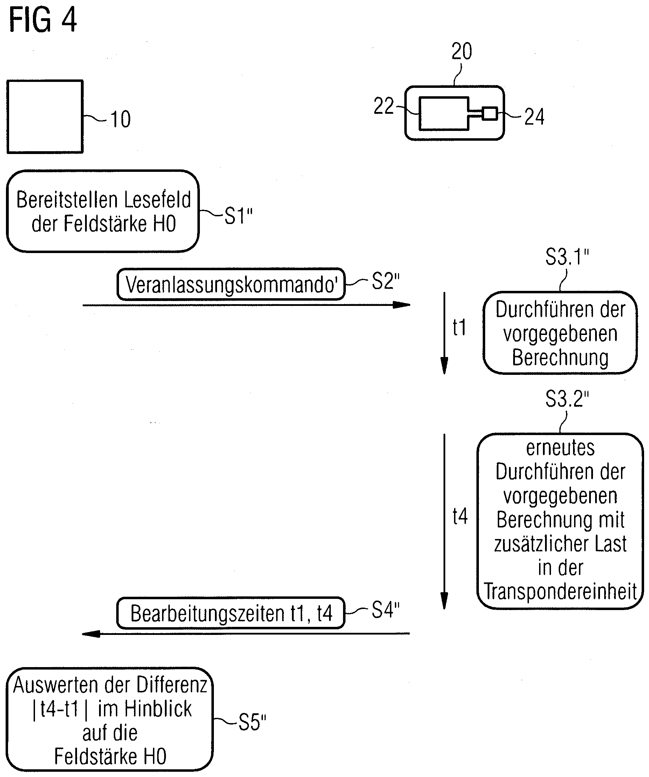

Mit Bezug auf Figur 4 wird eine weitere Ausführungsform eines Verfahrens illustriert, welches das Bestimmen von Bearbeitungszeiten beim Durchführen einer vorgegebenen Berechnung durch eine Transpondereinheit 20 in Abhängigkeit von der der Transpondereinheit 20 dazu zur Verfügung stehenden Energie ermöglicht.

Dabei wird seitens des Lesegeräts 10 in Schritt S1" ein Lesefeld gemäß einer konstanten, vorgegebenen Feldstärke H0 bereitgestellt. Diese Feldstärke kann sowohl innerhalb als auch außerhalb des Sättigungsbereiches der Transpondereinheit 20 liegen.

In Schritt S2" sendet das Lesegerät 10 ein im Vergleich zu den Verfahren aus Figur 2 und Figur 3 abweichendes Veranlassungskommando an die Transpondereinheit 20. Dieses Veranlassungskommando veranlasst die Transpondereinheit 20 sowohl zu einem ersten Durchführen der vorgegebenen Berechnung, ohne dass eine zusätzliche Last in der Transpondereinheit anliegt (vgl. Schritt S3. 1"), als auch zum erneuten Durchführen der vorgegebenen Berechnung, nun mit einer zusätzlich anliegenden Last in der Transpondereinheit 20 (Schritt S3. 2").

Diese zusätzliche Last kann beispielsweise durch das Durchführen einer weiteren Berechnung durch einen Coprozessor der Transpondereinheit 20 angelegt werden. Ein Zuschalten dieser zusätzlichen Last kann in dem Veranlassungskommando codiert sein.

Aufgrund der Tatsache, dass die der Transpondereinheit 20 zur Verfügung stehende Energie konstant bleibt, kann eine Bearbeitungszeit t1 zum Durchführen der vorgegebenen Berechnung ohne zusätzliche Last kürzer sein als eine Bearbeitungszeit t4 zum erneuten Durchführen der vorgegebenen Berechnung mit zusätzlicher Last. Dies liegt daran, dass die zusätzliche Last, d.h. beispielsweise die zusätzliche Berechnung im Coprozessor der Transpondereinheit, einen Anteil der der Transpondereinheit zur Verfügung stehenden Gesamtenergie benötigt. Die Größe der Differenz zwischen t1 und t4 hängt von der Feldstärke H0 ab.

In Schritt S4 überträgt die Transpondereinheit 20 die Bearbeitungszeiten t1 und t4 an das Lesegerät.

Das Lesegerät 10 wertet nun eine Differenz bzw. ein Betrag der Differenz der empfangenen Bearbeitungszeiten D1 und D4 im Hinblick auf die Feldstärke H0 aus.

In dem Fall, dass die Feldstärke H0 deutlich im Sättigungsbereich der Transpondereinheit 20 liegt, wird die erkennbare Differenz zwischen t1 und t4 sehr klein sein, da der Transpondereinheit 20 zum Durchführen der vorgegebenen Berechnung, trotz der zusätzlichen Last, immer noch genügend Energie zur Verfügung steht, um die vorgegebene Berechnung maximal schnell auszuführen.

In dem Fall jedoch, dass die Feldstärke H0 im absteigenden Bereich, d.h. außerhalb des Sättigungsbereichs der Transpondereinheit, liegt, wird eine signifikante Differenz der beiden Bearbeitungszeiten t1 und t4 erkennbar sein, da das Durchführen der vorgegebenen Berechnung unter zusätzlicher Last deutlich langsamer erfolgt als ohne die zusätzliche Last.

Diese Variante des Verfahrens lässt sich ebenfalls vorteilhaft zur Qualitätsprüfung einer Transpondereinheit 20 einsetzen.

Abschließend wird mit Bezug auf Figur 5 eine Bestimmung einer Bearbeitungszeit zum Durchführen einer vorgegebenen Berechnung in der Transpondereinheit 20 genauer beschrieben, wobei die Transpondereinheit 20 diese Bearbeitungszeit bestimmt.

Dazu erzeugt das Lesegerät 10 in Schritt T1 erneut ein Lesefeld mit einer vorgegebenen Feldstärke H. Mit diesem Lesefeld wird implizit auch ein Taktsignal S ausgesendet (im Falle des Standards ISO/IEC 14443 mit der Frequenz 13,56MHz)..

In Schritt T2 erkennt die Transpondereinheit 20 das Lesefeld und das externe Taktsignal S.

In Schritt T3 sendet das Lesegerät 10 ein Veranlassungskommando, welches die Transpondereinheit 20 veranlasst, die vorgegebene Berechnung durchzuführen (analog zu den Verfahren in Figur 2 und 3).

Um nun die Bearbeitungszeit zu bestimmen, die zum Durchführen der vorgegebenen Berechnung der Transpondereinheit notwendig ist, belegt die Transpondereinheit einen internen Zähler Z mit dem externen Taktsignal S, wie dies mit Bezug auf Schritt T4 angedeutet ist.

Mit Beginn der Durchführung der vorgegebenen Berechnung, zum Zeitpunkt T0, wird in der Transpondereinheit 20 in Schritt T'5 der entsprechende Zähler gestartet (Z_{START} = Z(S_{T0})) und in Schritt T6 wird der Zähler unmittelbar bei Beendigung der vorgegebenen Berechnung, zum Zeitpunkt T1, wieder gestoppt (Z_{STOP} = Z(S_{T1})).

Die Transpondereinheit 20 überträgt dann die entsprechenden Zählerstände, bzw. vorzugsweise, wie mit Bezug auf Schritt T7 angegeben, die Differenz der ermittelten Zählerstände zu Beginn und am Ende der vorgegebenen Berechnung, an das Lesegerät 10, welches daraus unmittelbar die Bearbeitungszeit ablesen kann, welche die Transpondereinheit 20 zum Durchführen der vorgegebenen Berechnung benötigt hat.

Gemäß einer alternativen, nicht dargestellten Ausführungsform kann die Bestimmung der Bearbeitungszeit in der Transpondereinheit 20 auch derart erfolgen, dass die Transpondereinheit 20, beispielsweise über einen Interrupt, das Aussenden eines Signals (z.b. SWTX) an das Lesegerät 10 unmittelbar zu Beginn des Durchführens der vorgegebenen Berechnung und unmittelbar bei Beendigung der entsprechenden Berechnung, veranlasst. Kommandos und Antworten hierauf werden als APDUs auf Anwendungsebene ausgetauscht. Das Signal ist bevorzugt ein Signal unterhalb der Anwendungsebene, also ein APDU-freies Signal. Eine CPU der Transpondereinheit fordert mittels des Interrupt eine Protokolleinheit der Transpondereinheit zum Senden des Signales auf. Diese Ausführungsform kann dann eingesetzt werden, wenn die Transpondereinheit 20 nicht geeignet eingerichtet ist, das externe Taktsignal S des Lesegeräts 10 zu verarbeiten, um beispielsweise einen Zähler oder dergleichen damit zu belegen.

Das Lesegerät 10 kann gemäß dieser Ausführungsform aus dem zeitlichen Abstand der beiden empfangenen Signale die Bearbeitungszeit, welche die Transpondereinheit 20 zum Durchführen der vorgegebenen Berechnung benötigt hat, bestimmen.

## Patentansprüche

1. Verfahren zwischen einer Transpondereinheit (20) und einem Lesegerät (10), umfassend die Schritte:
- Veranlassen (S2) der Transpondereinheit (20) zum Durchführen einer vorgegebenen Berechnung durch das Lesegerät (10);
- Durchführen (S3) der vorgegebenen Berechnung durch die Transpondereinheit (20), wobei der Transpondereinheit (20) zum Durchführen der vorgegebenen Berechnung Energie gemäß einem ersten Wert zur Verfügung steht;
- Bestimmen (T4, T5, T6) einer ersten Bearbeitungszeit (t1) durch die Transpondereinheit (20), welche die Transpondereinheit (20) zum Durchführen der vorgegebenen Berechnung benötigt hat;
- **gekennzeichnet durch** erneutes Durchführen (S7) der vorgegebenen Berechnung durch die Transpondereinheit (20), wobei der Transpondereinheit (20) zum erneuten Durchführen der vorgegebenen Berechnung Energie gemäß einem zweiten, vom dem ersten Wert verschiedenen Wert zur Verfügung steht;
- Bestimmen (T4, T5, T6) einer zweiten Bearbeitungszeit (t2), welche die Transpondereinheit (20) zum erneuten Durchführen der vorgegebenen Berechnung benötigt hat, und
- Auswerten (S9) der ersten Bearbeitungszeit (t1) und der zweiten Bearbeitungszeit (t2), insbesondere Auswerten einer Differenz zwischen der ersten Bearbeitungszeit (t1) und der zweiten Bearbeitungszeit (t1) mit Bezug auf zumindest einen vorgegebenen Referenzwert (tref),
wobei der Wert der Energie, welcher der Transpondereinheit (20) zum Durchführen der vorgegebenen Berechnung jeweils zur Verfügung steht, von der Feldstärke (H1; H2) eines Lesefeldes bestimmt wird, welches seitens des Lesegeräts (10) bereitgestellt wird.

2. Verfahren nach Anspruch 1, **dadurch gekennzeichnet, dass** die Transpondereinheit (20) die erste und/oder zweite Bearbeitungszeit bestimmt und an das Lesegerät (10) übermittelt.

3. Verfahren nach Anspruch 2, **dadurch gekennzeichnet, dass** die Transpondereinheit (20) die erste und/oder zweite Bearbeitungszeit unter Verwendung eines externen, seitens des Lesegeräts (10) bereitgestellten Taktsignals (S) bestimmt.

4. Verfahren nach Anspruch 1, **dadurch gekennzeichnet, dass** die Transpondereinheit (20) in Kombination mit dem Lesegerät (10) die erste und/oder zweite Bearbeitungszeit bestimmt.

5. Verfahren nach Anspruch 4, **dadurch gekennzeichnet, dass** die Transpondereinheit (20) in Kombination mit dem Lesegerät (10) die erste und/oder zweite Bearbeitungszeit bestimmt, indem die Transpondereinheit (20) vor Beginn und nach Beendigung der Durchführung der vorgegebenen Berechnung ein Signal an das Lesegerät (10) sendet und das Lesegerät (10) aus der zeitlichen Differenz zwischen dem Empfang der Signale die Bearbeitungszeit bestimmt.

6. Verfahren nach einem der Ansprüche 1 bis 5, **dadurch gekennzeichnet, dass** der Wert der Energie, welcher der Transpondereinheit (20) zum Durchführen der vorgegebenen Berechnung jeweils zur Verfügung steht, dadurch bestimmt wird, dass seitens der Transpondereinheit (20) verfügbare Energie nicht vollständig zum Durchführen der vorgegebenen Berechnung verwendet werden kann, da eine zusätzliche Last an der Transpondereinheit (20) anliegt.

7. Verfahren nach einem der Ansprüche 1 bis 6, **dadurch gekennzeichnet, dass** das Verfahren zum Erkennen eines Relaisangriffs auf die Transpondereinheit (20) eingesetzt wird,
wobei der Transpondereinheit (20) zum Durchführen der vorgegebenen Berechnung Energie gemäß einem ersten Wert zur Verfügung gestellt wird, welcher innerhalb eines Sättigungsbereichs der Transpondereinheit (20) liegt, und
wobei der Transpondereinheit (20) zum erneuten Durchführen der vorgegebenen Berechnung Energie gemäß einem zweiten Wert zur Verfügung gestellt wird, welcher unterhalb des Sättigungsbereichs der Transpondereinheit (20) liegt, und
wobei beim Auswerten der ersten Bearbeitungszeit (t1) und der zweiten Bearbeitungszeit (t2) geprüft wird, ob die Differenz zwischen der zweiten Bearbeitungszeit (t2) und der ersten Bearbeitungszeit (t1) einen vorgegebenen Schwellenwert (t_{ref}) überschreitet.

8. Verfahren nach einem der Ansprüche 1 bis 6, **dadurch gekennzeichnet, dass** das Verfahren zur Qualitätskontrolle der Transpondereinheit (20) eingesetzt wird,
wobei der Transpondereinheit (20) zum Durchführen der vorgegebenen Berechnung Energie gemäß einem ersten Wert zur Verfügung gestellt wird, welcher innerhalb eines Sättigungsbereichs der Transpondereinheit (20) liegt, und
wobei der Transpondereinheit (20) zum erneuten Durchführen der vorgegebenen Berechnung Energie gemäß einem zweiten Wert zur Verfügung gestellt wird, welcher ebenfalls im Sättigungsbereich der Transpondereinheit (20) liegt, und
wobei beim Auswerten der ersten Bearbeitungszeit (t1) und der zweiten Bearbeitungszeit (t2) geprüft wird, ob der Betrag der Differenz zwischen der zweiten Bearbeitungszeit (t2) und der ersten Bearbeitungszeit (t1) einen vorgegebenen Schwellenwert (t'_{ref}) unterschreitet.

9. Verfahren nach einem der Ansprüche 1 bis 8, **dadurch gekennzeichnet, dass** die vorgegebene Berechnung durch einen spezifischen Codeabschnitt definiert wird, der ein konstantes Laufzeitverhalten beim Durchführen der vorgegebenen Berechnung garantiert, wobei die vorgegebene Berechnung insbesondere keine Cache-Speicher-Zugriffe erfordert.

10. Verfahren nach einem der Ansprüche 1 bis 9, **dadurch gekennzeichnet, dass** während eines Durchführens der vorgegebenen Berechnung Betriebssystem-Mechanismen, welche das Laufzeitverhalten beeinflussen können, temporär deaktiviert werden.

11. Transpondereinheit (20), umfassend eine Antenne (22) und einen mit der Antenne (22) verbundenen integrierten Schaltkreis (24), und eingerichtet, mit einem Lesegerät (10) kontaktlos zu kommunizieren, wobei die Transpondereinheit (20) eingerichtet ist, nach Veranlassung durch das Lesegerät eine Bearbeitungszeit zum Durchführen einer vorgegebenen Berechnung in der Transpondereinheit zu bestimmen, wobei die Bearbeitungszeit von der vom Lesegerät zur Verfügung gestellten Energie abhängt.

12. Transpondereinheit (20) nach Anspruch 11, **dadurch gekennzeichnet, dass** die Transpondereinheit (20) eingerichtet ist, die Bearbeitungszeit direkt, unter Verwendung eines externen, seitens eines Lesegeräts (10) bereitgestellten Taktsignals (S) zu bestimmen, oder eingerichtet ist, die Bearbeitungszeit indirekt zu bestimmen, und dazu eingerichtet ist, vor Beginn und nach Beendigung der Durchführung der vorgegebenen Berechnung ein Signal an das Lesegerät (10) zu senden.

13. Lesegerät (10), welches eingerichtet ist, kontaktlos mit einer Transpondereinheit (20) nach Anspruch 11 oder 12 zu kommunizieren, und
weiter eingerichtet ist, die Transpondereinheit (20) zum wiederholten Durchführen einer vorgegebenen Berechnung zu veranlassen, wobei der Transpondereinheit (20) zum Durchführen der vorgegebenen Berechnung jeweils ein seitens des Lesegeräts (10) vorgegebener Wert an Energie zur Verfügung steht, und
wobei das Lesegerät (10) weiter eingerichtet ist, seitens der Transpondereinheit (20) empfangene Bearbeitungszeiten zum Durchführen der vorgegebenen Berechnung auszuwerten.

14. System, umfassend ein Lesegerät (10) sowie eine Transpondereinheit (20) nach einem der Ansprüche 11 oder 12, welche jeweils eingerichtet sind, ein Verfahren nach einem der Ansprüche 1 bis 10 durchzuführen.

## Claims

1. A method between a transponder unit (20) and a reading device (10), comprising the steps of:
- causing (S2) the transponder unit (20) to carry out a predetermined computation by the reading device (10);
- carrying out (S3) the predetermined computation by the transponder unit (20), wherein energy according to a first value is available to the transponder unit (20) for carrying out the predetermined computation;
- determining (T4, T5, T6) a first processing time (t1) by the transponder unit (20), said time having been needed by the transponder unit (20) to carry out the predetermined computation;
- **characterized by** the transponder unit (20) carrying out (S7) the predetermined computation again, wherein energy according to a second value, which is different from the first value, is available to the transponder unit (20) for carrying out the predetermined computation again;
- determining (T4, T5, T6) a second processing time (t2), said time having been needed by the transponder unit (20) to carry out the predetermined computation again; and
- evaluating (S9) the first processing time (t1) and the second processing time (t2), in particular evaluating a difference between the first processing time (t1) and the second processing time (t1) with reference to at least one predetermined reference value (tref),
wherein the value of the energy which is available to the transponder unit (20) for carrying out the predetermined computation in each case is determined by the field strength (H1; H2) of a reading field, which is supplied on the part of the reading device (10).

2. The method according to claim 1, **characterized in that** the transponder unit (20) determines the first and/or second processing time and transmits it to the reading device (10).

3. The method according to claim 2, **characterized in that** the transponder unit (20) determines the first and/or second processing time while employing an external clock signal (S) supplied on the part of the reading device (10).

4. The method according to claim 1, **characterized in that** the transponder unit (20) determines the first and/or second processing time in combination with the reading device (10).

5. The method according to claim 4, **characterized in that** the transponder unit (20) determines the first and/or second processing time in combination with the reading device (10) by the transponder unit (20) sending a signal to the reading device (10) before the start and after completion of carrying out the predetermined computation, and the reading device (10) determining the processing time from the time difference between the receipt of the signals.

6. The method according to any of claims 1 to 5, **characterized in that** the value of the energy which is made available to the transponder unit (20) in each case for carrying out the predetermined computation is determined **in that** energy available on the part of the transponder unit (20) cannot be employed in its entirety for carrying out the predetermined computation, since an additional load is applied to the transponder unit (20).

7. The method according to any of claims 1 to 6, **characterized in that** the method is used to detect a relay attack on the transponder unit (20),
wherein energy according to a first value that lies within a saturation range of the transponder unit (20) is made available to the transponder unit (20) for carrying out the predetermined computation, and
wherein energy according to a second value that lies below the saturation range of the transponder unit (20) is made available to the transponder unit (20) for carrying out the predetermined computation again, and
wherein when evaluating the first processing time (t1) and the second processing time (t2) it is checked whether the difference between the second processing time (t2) and the first processing time (t1) exceeds a predetermined threshold value (t_{ref}).

8. The method according to any of claims 1 to 6, **characterized in that** the method is used for the quality control of the transponder unit (20),
wherein energy according to a first value that lies within a saturation range of the transponder unit (20) is made available to the transponder unit (20) for carrying out the predetermined computation, and
wherein energy according to a second value that likewise lies within the saturation range of the transponder unit (20) is made available to the transponder unit (20) for carrying out the predetermined computation again, and
wherein when evaluating the first processing time (t1) and the second processing time (t2) it is checked whether the amount of the difference between the second processing time (t2) and the first processing time (t1) falls below a predetermined threshold value (t'_{ref}).

9. The method according to any of claims 1 to 8, **characterized in that** the predetermined computation is defined by a specific code section which guarantees a constant runtime behavior when carrying out the predetermined computation, wherein the predetermined computation in particular does not require any cache memory accesses.

10. The method according to any of claims 1 to 9, **characterized in that** operating system mechanisms which can influence the runtime behavior are temporarily deactivated while the predetermined computation is being carried out.

11. A transponder unit (20), comprising an antenna (22) and an integrated circuit (24) connected to the antenna (22) and adapted to communicate contactlessly with a reading device (10), wherein the transponder unit (20) is adapted, after causing by the reading device, to determine a processing time for carrying out a predetermined computation in the transponder unit, wherein the processing time depends on the energy made available by the reading device.

12. The transponder unit (20) according to claim 11, **characterized in that** the transponder unit (20) is adapted to determine the processing time directly while employing an external clock signal (S) supplied on the part of a reading device (10) or is adapted to determine the processing time indirectly, and is adapted to send a signal to the reading device (10) before the start and after completion of carrying out the predetermined computation.

13. A reading device (10) which is adapted to communicate contactlessly with a transponder unit (20) according to claim 11 or 12, and
is further adapted to cause the transponder unit (20) to carry out a predetermined computation repeatedly, wherein a value of energy predetermined by the reading device (10) is made available to the transponder unit (20) in each case for carrying out the predetermined computation, and
the reading device (10) is further adapted to evaluate processing times for carrying out the predetermined computation received on the part of the transponder unit (20).

14. A system comprising a reading device (10) and a transponder unit (20) according to either of claims 11 or 12, which are each adapted to carry out a method according to any of claims 1 to 10.

## Revendications

1. Procédé entre une unité de transpondeur (20) et un appareil de lecture (10), comprenant les étapes :
- déclenchement (S2), par l'appareil de lecture (10), de l'exécution par l'unité de transpondeur (20) d'un calcul prédéterminé ;
- exécution (S3), par l'unité de transpondeur (20), du calcul prédéterminé, cependant que, pour l'exécution du calcul prédéterminé, de l'énergie conforme à une première valeur est à la disposition de l'unité de transpondeur (20),
- détermination (T4, T5, T6), par l'unité de transpondeur (20), d'un premier temps de traitement (t1) dont l'unité de transpondeur (20) a eu besoin pour l'exécution du calcul prédéterminé ;
- **caractérisé par** une nouvelle exécution (S7) du calcul prédéterminé par l'unité de transpondeur (20), cependant que, pour la nouvelle exécution du calcul prédéterminé, de l'énergie conforme à une deuxième valeur, différente de la première valeur, est à la disposition de l'unité de transpondeur (20),
- détermination (T4, T5, T6) d'un deuxième temps de traitement (t2) dont l'unité de transpondeur (20) a eu besoin pour la nouvelle exécution du calcul prédéterminé, et
- évaluation (S9) du premier temps de traitement (tl) et du deuxième temps de traitement (t2), en particulier évaluation d'une différence entre le premier temps de traitement (t1) et le deuxième temps de traitement (t1), par rapport à au moins une valeur de référence prédéterminée (t_{ref}), cependant que la valeur de l'énergie qui est respectivement à la disposition de l'unité de transpondeur (20) pour l'exécution du calcul prédéterminé est déterminée par l'intensité de champ (H1; H2) d'un champ de lecture mis à disposition par l'appareil de lecture (10).

2. Procédé selon la revendication 1, **caractérisé en ce que** l'unité de transpondeur (20) détermine le premier et/ou le deuxième temps de traitement et le transmet à l'appareil de lecture (10).

3. Procédé selon la revendication 2, **caractérisé en ce que** l'unité de transpondeur (20) détermine le premier et/ou le deuxième temps de traitement en utilisant un signal d'horloge (S) externe mis à disposition par l'appareil de lecture (10).

4. Procédé selon la revendication 1, **caractérisé en ce que** l'unité de transpondeur (20) détermine en combinaison avec un appareil de lecture (10) le premier et/ou le deuxième temps de traitement.

5. Procédé selon la revendication 4, **caractérisé en ce que** l'unité de transpondeur (20) détermine en combinaison avec un appareil de lecture (10) le premier et/ou le deuxième temps de traitement, ce qui a lieu **en ce que** l'unité de transpondeur (20), avant le début et après la fin de l'exécution du calcul prédéterminé, envoie un signal à l'appareil de lecture (10), et que l'appareil de lecture (10), à partir de la différence temporelle entre la réception des signaux, détermine le temps de traitement.

6. Procédé selon une des revendications de 1 à 5, **caractérisé en ce que** la valeur de l'énergie respectivement à disposition de l'unité de transpondeur (20) pour l'exécution du calcul prédéterminé est déterminée **en ce que** l'énergie à la disposition de l'unité de transpondeur (20) ne peut pas être entièrement utilisée pour l'exécution du calcul prédéterminé car une charge supplémentaire est appliquée à l'unité de transpondeur (20).

7. Procédé selon une des revendications de 1 à 6, **caractérisé en ce que** le procédé est mis en œuvre pour reconnaître une attaque de relais sur l'unité de transpondeur (20),
cependant que, pour l'exécution du calcul prédéterminé, de l'énergie conforme à une première valeur comprise dans une plage de saturation de l'unité de transpondeur (20) est mise à la disposition de l'unité de transpondeur (20), et
cependant que, pour la nouvelle exécution du calcul prédéterminé, de l'énergie conforme à une deuxième valeur située en-dessous de la plage de saturation de l'unité de transpondeur (20) est mise à la disposition de l'unité de transpondeur (20), et
cependant que, lors de l'évaluation du premier temps de traitement (t1) et du deuxième temps de traitement (t2), il est vérifié si la différence entre le deuxième temps de traitement (t2) et le premier temps de traitement (t1) dépasse une valeur seuil prédéterminée (t_{ref}).

8. Procédé selon une des revendications de 1 à 6, **caractérisé en ce que** le procédé est mis en œuvre pour le contrôle de qualité de l'unité de transpondeur (20),
cependant que, pour l'exécution du calcul prédéterminé, de l'énergie conforme à une première valeur comprise dans une plage de saturation de l'unité de transpondeur (20) est mise à la disposition de l'unité de transpondeur (20), et
cependant que, pour la nouvelle exécution du calcul prédéterminé, de l'énergie conforme à une deuxième valeur comprise également dans la plage de saturation de l'unité de transpondeur (20) est mise à la disposition de l'unité de transpondeur (20), et
cependant que, lors de l'évaluation du premier temps de traitement (t1) et du deuxième temps de traitement (t2), il est vérifié si le montant de la différence entre le deuxième temps de traitement (t2) et le premier temps de traitement (t1) dépasse une valeur seuil prédéterminée (t'_{ref}).

9. Procédé selon une des revendications de 1 à 8, **caractérisé en ce que** le calcul prédéterminé est défini par une section spécifique de code qui garantit un comportement constant de temps de fonctionnement lors de l'exécution du calcul prédéterminé, cependant que le calcul prédéterminé ne nécessite en particulier pas d'accès à mémoire cache.

10. Procédé selon une des revendications de 1 à 9, **caractérisé en ce que**, pendant une exécution du calcul prédéterminé, des mécanismes de système de fonctionnement qui peuvent influencer le comportement de temps de fonctionnement sont temporairement désactivés.

11. Unité de transpondeur (20), comprenant une antenne (22) et un circuit intégré (24) relié à l'antenne (22), et conçu pour communiquer sans contact avec un appareil de lecture (10), cependant que l'unité de transpondeur (20) est conçue pour, après déclenchement par l'appareil de lecture, déterminer un temps de traitement pour l'exécution d'un calcul prédéterminé dans l'unité de transpondeur, cependant que le temps de traitement dépend de l'énergie mise à disposition par l'appareil de lecture.

12. Unité de transpondeur (20) selon la revendication 11, **caractérisé en ce que** l'unité de transpondeur (20) est conçue pour déterminer directement le temps de traitement en utilisant un signal d'horloge (S) externe mis à disposition par un appareil de lecture (10), ou est conçue pour déterminer indirectement le temps de traitement, et est pour cela conçue pour, avant le début et après la fin de l'exécution du calcul prédéterminé, envoyer un signal à l'appareil de lecture (10).

13. Appareil de lecture (10) conçu pour communiquer sans contact avec une unité de transpondeur (20) selon la revendication 11 ou 12, et
conçu en outre pour déclencher une exécution répétée, par l'unité de transpondeur (20), d'un calcul prédéterminé, cependant que respectivement une valeur d'énergie prédéterminée par l'appareil de lecture (10) est à la disposition de l'unité de transpondeur (20) pour l'exécution du calcul prédéterminé, et
cependant que l'appareil de lecture (10) est conçu en outre pour évaluer des temps de traitement, pour l'exécution du calcul prédéterminé, reçus de la part l'unité de transpondeur (20).

14. Système comprenant un appareil de lecture (10) ainsi qu'une unité de transpondeur (20) selon une des revendications 11 ou 12, lesquels sont respectivement conçus pour exécuter un procédé selon une des revendications de 1 à 10.
